(19) Europäisches Patentamt / European Patent Office / Office européen des brevets

(11) **EP 1 950 553 B1**

(12) **EUROPEAN PATENT SPECIFICATION**

(45) Date of publication and mention
of the grant of the patent:
**24.02.2016 Bulletin 2016/08**

(51) Int Cl.:
***B82Y 15/00*** *(2011.01)*     ***G01N 21/01*** *(2006.01)*
***G01N 21/31*** *(2006.01)*     ***G01N 21/64*** *(2006.01)*
***G01N 21/03*** *(2006.01)*

(21) Application number: **08006090.8**

(22) Date of filing: **17.08.2000**

(54) **Liquid photometer using surface tension to contain sample**

Fotometer zum Vermessen einer mittels Oberflächenspannung gehaltenen flüssigen Probe

Photomètre pour la mesure d'un échantillon liquide contenu par tension de surface

(84) Designated Contracting States:
**DE FR GB IT**

(30) Priority: **20.08.1999 US 150066 P**

(43) Date of publication of application:
**30.07.2008 Bulletin 2008/31**

(62) Document number(s) of the earlier application(s) in
accordance with Art. 76 EPC:
**00955617.6 / 1 210 579**

(73) Proprietor: **Nanodrop Technologies LLC
Wilmington, DE 19810 (US)**

(72) Inventor: **Robertson, Charles William
Rockland
DE 19732 (US)**

(74) Representative: **Boult Wade Tennant
Verulam Gardens
70 Gray's Inn Road
London WC1X 8BT (GB)**

(56) References cited:
**EP-A- 0 580 362     US-A- 4 286 881
US-A- 4 643 580     US-A- 5 739 432**

• **PATENT ABSTRACTS OF JAPAN vol. 008, no. 183
(P-296), 23 August 1984 (1984-08-23) & JP 59
073753 A (TOSHIBA KK), 26 April 1984
(1984-04-26)**

**Description**

**FIELD OF INVENTION**

This invention relates to the fields of photometry, spectrophotometry, fluorometry and spectrofluorometry and their use in quantitating and or characterizing liquids and solutions.

**BACKGROUND OF INVENTION**

This invention relates to the field of spectrophotometers and related instruments. More particularly the invention relates to ultra low sample volume instruments working in the sample volume range of 2 microliters or less Such devices are particularly useful in the quantitation of biotechnology samples including nucleic acids or proteins where it is desirable to keep sample loss and/or cross contamination to a minimum.

The prior art contains examples of attempts to supply low volume spectrophotometers. World Precision Instruments of Sarasota, FL offers parts from which an instrument handling less than 20 microliters can be built for around $3000. This instrument uses a fiber optic dipping probe with a tip diameter of 1.5 mm (DipTip®), with their miniature fiber optic spectrometer and F-O-Lite H light source. With a deuterium light source (D2Lux) a UV spectrophotometer can be constructed.

US patent 4,643,580 to Gross et. al. discloses a photometer head in which there is a housing for receiving and supporting small test volumes. A fiber optic transmitter and receiver are spaced within a housing so that a drop can be suspended between the two ends.

McMillan, in US patent 4,910,402 discloses apparatus in which a syringe drops liquid into the gap between two fixed fibers and an IR pulse from a solid state laser is fed through the droplet. The output signal is analyzed as a function of the interaction of the radiation and the liquid of the drop.

Ocean Optics, of Dunedin, FL supplies a SpectroPipetter for microliter-volume samples, using a sample volume of about 2 microliters. The optics not only carry light to and from the samples, but act as a plunger to load the sample. The tip of the pipetter includes the sample cell.

US Patent 4,286,881 discloses a spectrophotometric cell for semi-solid samples.

US Patent 5,739,432 discloses apparatus for ultrasonic characterisation of liquid-droplet-size samples in which the droplet is held by surface tension.

Liquids, mixtures, solutions and reacting mixtures or solutions are often characterized using optical techniques such as photometry, spectrophotometry, fluorometry, or spectrofluorometry. In order to characterize samples of these liquids, the liquid is usually contained in a vessel referred to as a cell or cuvette two or more of whose sides are of optical quality and permit the passage of those wavelengths needed to characterize the sample liquid contained therein. When dealing with very small sample volumes of say from 1 to 2 microliters, it is difficult to create cells or cuvettes small enough to be filled and permit the industry standard 1 cm optical path to be used. It is also difficult and/or time consuming to dean these cells or cuvettes for use with another sample. In the case of photometry or spectrophotometry, the value most commonly sought is the sample absorbance $A$ defined by

$$A = -\log T$$

Where $T$ is the transmittance, or

$$A = -\log (I/I_0)$$

where $I_0$ is the level of light transmitted through a blank sample (one containing all components except the one being measured or one whose absorbance is known to be negligible and with optical properties identical to those of the sample being measured), and $I$ the level of light transmitted through the sample being measured. Most commonly the absorbance value is measured in a cell or cuvette with a 1 cm optical path length. However, Lambert's law states that for a collimated (all rays approximately parrallel) beam of light passing through homogeneous solutions of uniform concentration the absorbance is proportional to the path length through the solution. For two pathlengths $X$ and $Y$,

$$(\text{Absorbance } X)/(\text{Absorbance } Y) = (\text{Pathlength } X)/(\text{Pathlength } Y).$$

Thus it is reasonable that absorbance can be measured with path lengths other than 1 cm and corrected for path length to the equivalent value for a 1 cm path which can be more easily compared to data from other spectrophotometers. The sample path lengths in the range of 0.2 to 2 mm used in this invention can be used to generate absorbance values that can be easily corrected to the 1 cm path equivalent.

Although liquids confined by surface tension and an optical surface are well known, e.g. raindrops on the window, establishing a collimated optical light path of known length through such confined liquids has been perceived as difficult The recent advent of small spectrometers designed to be used with fiber optics has made it possible to consider spectrophotometric geometries not readily possible before.

It is the object of the instant invention to make use of the surface tension of a microliter or submicroliter sample of liquid to provide sufficient means to confine it within the analysis region of an optical analysis instrument and to carry out the requisite measurement

## STATEMENT OF INVENTION

The invention is directed to an apparatus according to claim 1.

The invention is an optical instrument for photometric, spectrophotometric, fluorometric or spectrofluorometric analysis of liquids contained between two parallel surfaces spaced apart a known distance, wherein the sample liquid is confined by the surfaces and the surface tension of the liquid. Each of these surfaces contains an optical fiber mounted coaxially with each and perpendicular to the parallel confining surfaces. The shape and nature of the surfaces serve to confine the liquid so as to center the confined droplet in the optical path of the optical fibers imbedded in the surfaces. An apparatus supporting the surfaces permits the surfaces to be separated to allow loading of the sample and cleaning of the surfaces after sample analysis. For some applications, the optical fibers can be replaced by miniature sources like light emitting diodes (LEDs) and detector or detectors with optical filters. The LEDs with their characteristically small emitting area would replace the source fiber and small solid state detectors with associated filters like those used in color CCDs for imaging would replace the receiving fiber and spectrometer.

## BRIEF DESCRIPTION OF THE DRAWINGS

FIGURE 1 is a drawing of a cutaway section of the optical path of the invention.

FIGURE 2 is a drawing of a cutaway section of the optical path of the invention with additional fluorometric source optimal fibers shown.

FIGURE 3a is a perspective drawing of the process by which the sample is loaded into the optical path of the invention.

FIGURE 3b shows the sample between the two anvils in the measurement position.

FIGURE 3c shows the sample compressed between the two anvils In the short path or sample compression position.

FIGURE 3d shows the sample column drawn by opening the anvils from the sample compression position to the sample measurement position.

FIGURE 4a is a perspective drawing of apparatus of the invention in its open position with the source and spectrometers.

FIGURE 4b shows the apparatus in its closed position, as it would be for sample compression or analysis.

FIGURES 5a and 5b show a system with four spectrophotometeric systems operating simultaneously for use on robotic platforms in both the loading, 5a and measuring, 5b configurations respectively.

FIGURE 6a is a perspective view of the open instrument of the invention showing two pipetter tips loading two parts of a mixture, each on either side of the measurement apparatus.

FIGURE 6b shows the instrument of Figure 6a closed.

FIGURES 7a and 7b show perspective views of two path lengths provided by the apparatus of the invention so that a differential absorbance path is established.

FIGURE 8 shows a perspective view of a measurement made in the instrument of the invention holding the sample between two transparent sheets.

FIGURE 9 shows a perspective view of a measurement made in the instrument of the invention holding the sample within a transparent container with flexible walls.

## DESCRIPTION OF THE INVENTION

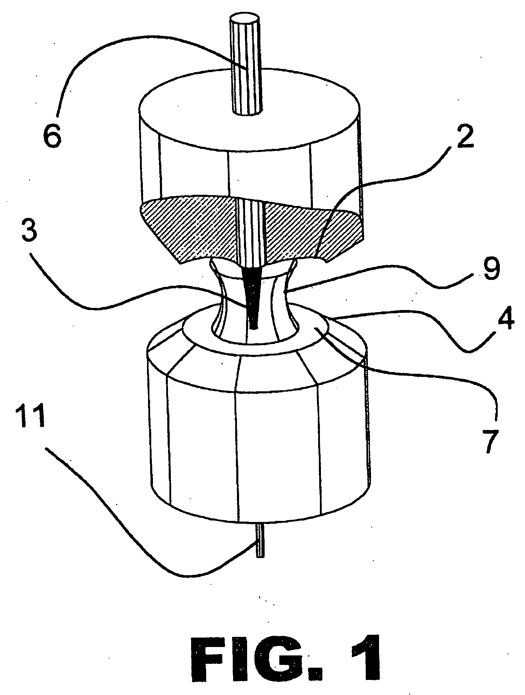

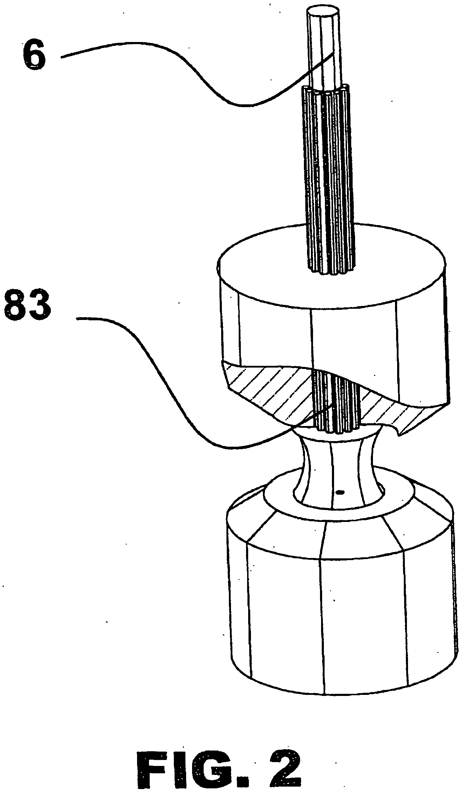

The liquid sample **9** shown In Figure 1 is contained by its surface tension between the anvil-like surfaces **2** and **7** also shown in Figure 1. Light **3** from the system source coming through the fiber 11 container in and flush with surface **7** radiates upward through the liquid sample and is collected by the larger fiber or light pipe **6** in the upper surface **2** and sent on to the analysis photometer or spectrometer for absorbance measurements. For making fluorescence measurements, the excitation light can also be brought to the sample through fibers surrounding the collection fiber **6** as is shown in **83**, Figure 2. This reduces the need for high excitation wavelength rejection on the part of the spectrometer collecting the fluorescence light from the sample through collection fiber **6**.

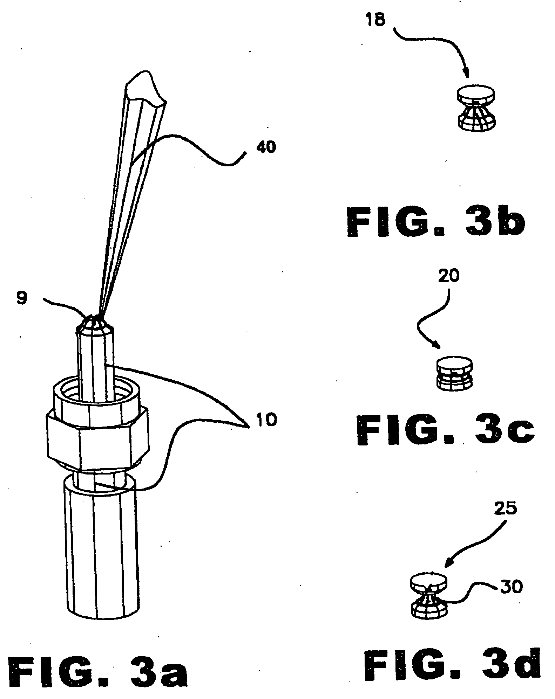

Samples are loaded onto the lower source with a pipetting means **40**, Figure 3a such as a 2 microliter Pipetteman® from the Ranin® Corporation of Wobum, MA, part of the tip of which is shown in 40. The droplet when emptied from the pipette, if of sufficient volume, will spread to cover the lower anvil surface **7**, Figure 1 which is typically the end of an industry standard SMA fiber optic connector **10**, Figure 3a (found as connectors on the ends of optical patch cords like p/n P-400-2-UV-VIS from Ocean Optics inc. of Dunedin, FL) until it encounters the sharp edge shown as **4**, Figure 1. For most SMA connectors the approximate 2mm end diameter can be effectively covered with 2 microliters of water or a water-based solutions.

The upper second surface is brought into the measurement position **18**, Figure 3b and then into dose proximity **20** to the lower surface **7**, Figure 3c making contact with the deposited droplet wetting the entire confining surface before returning to the sample measurement position and drawing up the sample measurement column **30**, Figure 3d shown in **25**. By applying blank samples, samples missing the component being analyzed, the difference in transmitted light intensity can be used to characterize the sample according to

$$A = -\log (I/I_0)$$

where $I_0$ is level of transmitted light with the component being analyzed absent and $I$ is the level of light transmitted through the sample and **A** is the absorbance value which can be related to the concentration of the component being analyzed by Beer's law which states that for solutions **1** and **2** that

$$(Absorbance\,1)/(Absorbance\ 2) = (Concentration\ 1)/(Concentration\ 2)$$

Thus, when compared with a blank sample, the concentration can be directly determined from the absorbance **A**.

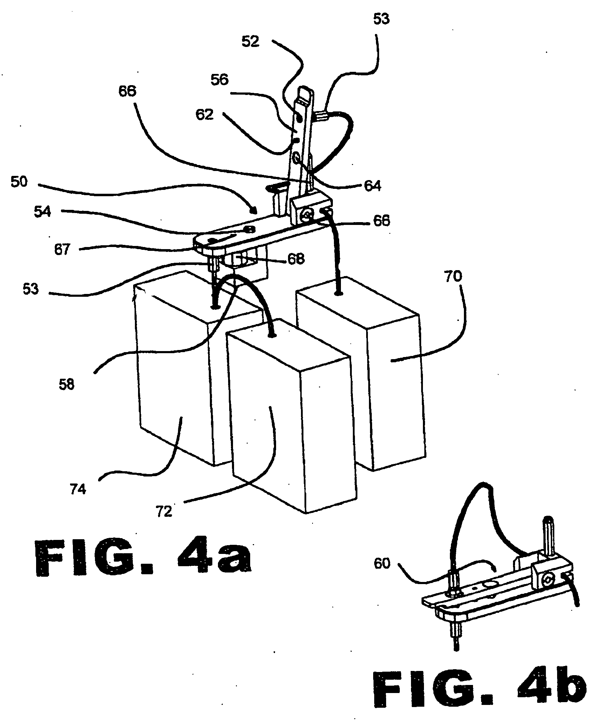

The SMA optical fiber connectors can be held in place by apparatus shown in Figure 4a and 4b. The light from the system source **74** (Ocean Optics inc. p/n DT-1000, a combined deuterium arc and quartz halogen incandescent lamp, alternatively a xenon flashlamp can be used) is coupled through a bifurcated optical fiber assembly (Ocean Optics inc. p/n BIF-100-2-UV-VIS) to the apparatus **50** with the second fiber of the bifurcated assembly going to reference slave spectrometer **72** (Ocean Optics p/n SD2000). The SMA connectors **53** are mounted to the apparatus by means of threaded couplers **52** (World Precision Instruments p/n 13370) which are threaded into the apparatus. The swing arm **56** carrying the upper optical fiber can be lowered to align the source with the detection fiber as is shown in **60**, Figure 4b. The swing arm spacing is controlled by pin **62** resting on the plunger **67** of solenoid **68** (Lucas Ledex of Vandalia, OH p/n 174534-033) shown mounted below the apparatus. The other end of the solenoid plunger **67** rests on spring plunger **58** (Manhattan Supply of Plainview, NY p/n 82412032). The sample can be compressed as is shown in **20**, Figure 3c by pushing on the swing arm **56** so as to push the solenoid plunger to the limit of its travel or by actuating the solenoid electrically and pulling the plunger to its stop. The swing arm is held in both its up and its down position by magnet **64** (Edmund Scientific of Barrington, NJ p/n J35-105) attracted to either post 66 or alien head cap screw **54**. With the swing arm in its raised position, the sample detection surfaces may be cleaned by wiping the sample from both the lower and upper SMA connector ends before reloading.

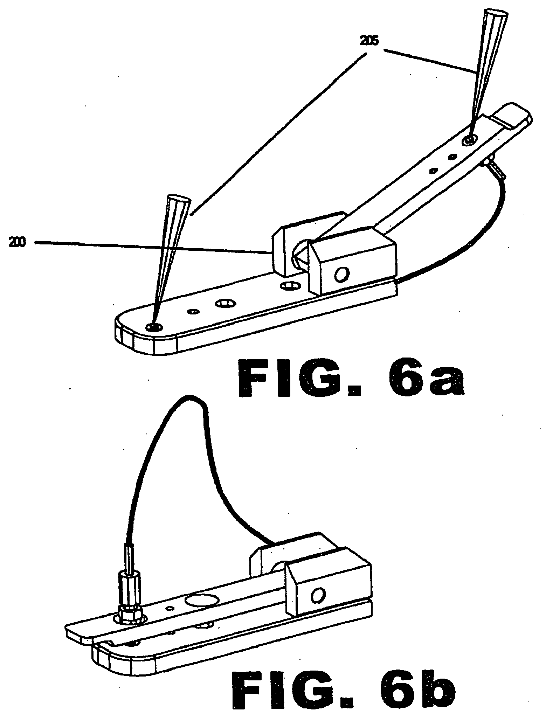

Light transmitted through the sample is collected by the upper fiber and coupled to the detection master spectrometer **70** (Ocean Optics p/n SD2000). The fiber is confined to minimize flexure of the fiber which would cause unnecessary variability in its transmission and thus unneccessary variation in measured absorbances. The swing arm is precision pivoted on a shaft turning in two preloaded ball bearings **66.** Note that the instrument is opened by turning through an arc sufficient to permit loading and cleaning. See Figure 4. Preferably it is opened at least 90 degrees as seen in Figure 4 and more preferably the arc approachs 160 degrees as seen in Figure 6a.

In order to accomplish illumination of the sample for fluorescence as shown in **83**, Figure 2, the upper fiber assembly would need to be custom made so as to surround the collection fiber with illumination fibers. These would be bundled and illuminated with the source wavelength compatible for use with the sample.

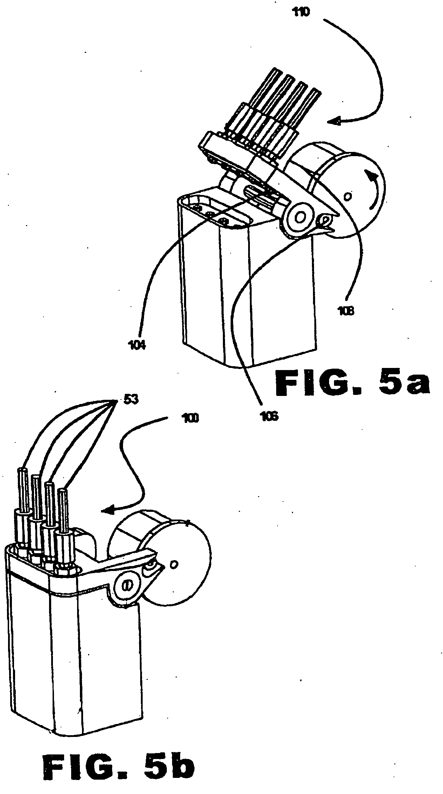

As seen in Figure 5a and 5b, two or more of the photometeric systems can be grouped in unitary form to test multiple samples simultaneously. Such a multiple parallel photometer system can be employed with a multi-pipette robot system such as the MultiPROBE II made by Packard Instrument Company of Meriden, CT. In Figure 5, the four signal fibers **6**, Figure 1, each feed a fiber optic spectrometer and the spectra are taken simultaneously. The four source fibers, not shown, are illuminated from a single source which may be referenced with a single reference spectrometer as with the single channel system. In Figure 5 the apparatus is shown closed **100** and open for loading **110**. Opening and dosing are controlled by a rotary actuator **108** such as p/n 195191-031 made by Lucas Ledex of Vandalia, OH and cam **106**. Spring plunger **104** such as p/n 3408A35 sold by McMaster-Carr of New Brunswick, NJ controls the position and provides the spring force against which the compression overtravel is accomplished for initial spreading of the sample.

Samples for photometric analysis can also be loaded into the sample handling apparatus in two parts, one on each of the opposing surfaces. This is especially useful where the sample of interest is a two part reacting mixture where the one or more of the beginning absorbance, the ending absorbance, and the rate of reaction are of interest and can be measured photometrically of fluorometrically. Samples of this sort can be loaded into the open spectrophotometer as shown in Figure 6a, where two pipetter tips **205** are shown loading the two parts of the mixture, each on either side of the measurement apparatus **200**. When closed as shown in Figure 6b, measurement can be made from onset of any reaction. The exact time of sample mixing can be determined from photometric or fluorometric measurement through the apparatus optical fibers.

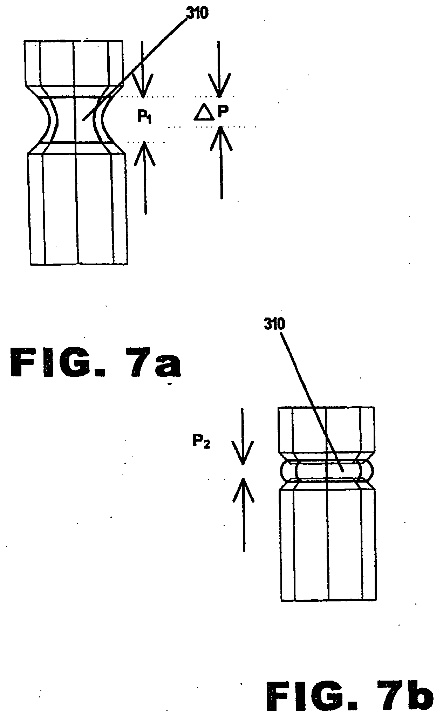

Samples can also be measured with a differential absorbance path as shown in Figure 7a and 7b. Here sample absorbance can be measured by changing the optical path over which the absorbance is measured, measuring the sample at each of one or more path lengths, where the difference in path length combined with the the difference in transmitted intensity can be used to calculate the sample absorbance. This can be of significant value if the sample is highly absorbing and the accuracy of the path difference for a small path difference can be better determined than the absolute full optical path. Measurements are taken as shown in figure 7a, where sample **310** is shown with a relatively long path $P_1$ and Figure 7b with a relatively short path length $P_2$ between the moveable anvils carrying the facing surfaces with one or more path differences $\Delta P$ with the absorbance at the shorter path $P_2$ being subtracted from the absorbance of one or more of the longer paths to arrive at the absorbance of the sample.

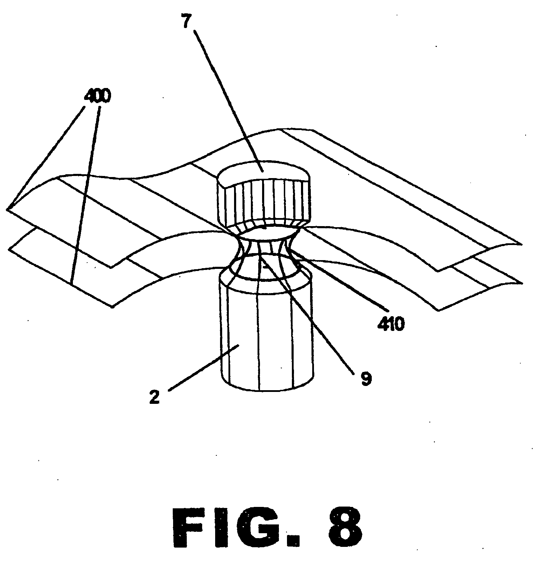

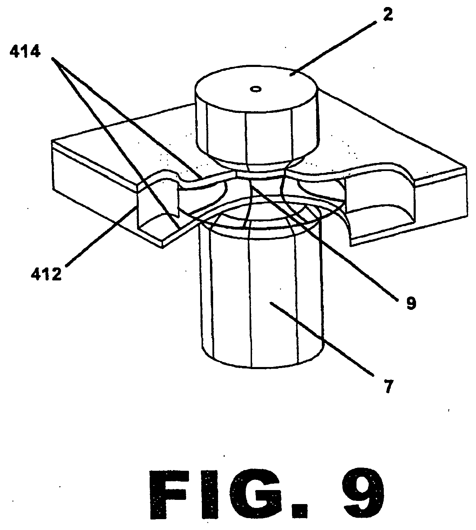

Samples can also be contained between two thin sheets of optically transparent material like Teflon ™ or polyethylene films. As shown in Figure 8, the same sort of column drawn between the two parts of the sample apparatus can be drawn between the two thin optical sheets **400** where the anvils of the aparatus are wetted to the film surfaces to minimize reflection at the interface and aid in pulling the measurement column. This would be of significant use where samples are corrosive or dangerous to handle for safety reasons and containment of the sample is preferred. The two containing sheets **400** allow the two parts **2** and **7** of the sample apparatus to draw the sample **9** into column **410**. Differential measurement of the sort discussed above would be of significant value in this sort of measurement as the effects of the interfaces could be minimized with differential measurement The two sheets **400** can be replaced by a small vessel **412**, see Figure 9, with flexible walls **414** such that the sample contained can be pulled into a measurement column. The columnn is pulled by pushing the anvils of the apparatus into the film until contact is made by both films, then drawing the measurement column. The compliance of the film will cause it to remain in contact with the anvils. Wetting the anvils before making contact will assist in maintaining contact and in minimizing reflection at the interface between the film and the optical fiber inbedded in the anvil. Once the measurement column is pulled, absorbance can be measured as a difference in absorbance between two path lengths.

**Claims**

1. Apparatus for performing a photometric or spectrophotometric measurement on a liquid sample, comprising means providing two opposed surfaces (2, 7) movable relative to each other, wherein the sample (9) can be placed on one of said opposed surfaces or part of the sample can be placed on each of said surfaces; means (56, 58, 62, 67, 68) for

(a) moving the surfaces toward each other to a predetermined compression position whereby the liquid sample on at least one of said surfaces can be spread and can wet the surfaces; and
(b) subsequently moving the surfaces apart from each other a preselected distance to a measurement position, whereby the liquid sample can be contained between the surfaces by surface tension and pulled into a measurement column having a desired optical path length;

and means (3, 6, 9, 70, 74, 72) for performing said photometric or spectophotometric measurement through that column.

2. The apparatus of claim 1, including a photometric or spectrophotometric source (74) contained in one said surface, and a photometric or spectrophotometric detector (70) contained in the other said surface.

3. The apparatus of claim 2 wherein one or both of the source (74) and detector (70) are each coupled to the sample with an optical fiber or light pipe (6,11).

4. The apparatus of claim 2 wherein there is means (62) such that the optical path between the two surfaces (7,2) and through the sample can be varied to accommodate a wide range of sample absorbances.

5. The apparatus of claim 2 wherein the source (83) is arranged to excite fluorescence in the sample (5) and the detector has associated means (6) to block the source illumination and detect only the fluorescence.

6. The apparatus of claim 1, wherein the apparatus comprises a frame;
one of said surfaces is a fixed or anvil surface (7) mounted on the frame;
the other of said surfaces is a moveable surface (2) mounted in the frame in parallel opposition to said fixed anvil surface (7);
and the apparatus further comprises at least two optical fibers (6, 11) penetrating at least one of said surfaces (7, 2), each of the fibers being finished flush with its respective surface;
at least one of the optical fibers being arranged for delivering light to a sample contained between the surfaces, and one other optical fiber being arranged to transmit transmitted or excited energy to a detector.

7. The apparatus of claim 6 wherein the at least two optical fibers (6,11) are opposed, and wherein each surface (7,2) is penetrated by at least one fiber.

**Patentansprüche**

1. Vorrichtung zum Ausführen einer photometrischen oder spektrophotometrischen Messung an einer flüssigen Probe, die Folgendes umfasst:

Mittel, die zwei gegenüberliegende Flächen (2, 7), die in Bezug aufeinander beweglich sind, bereitstellen, wobei die Probe (9) auf einer der gegenüberliegenden Flächen angeordnet werden kann oder ein Teil der Probe auf jeder der Flächen angeordnet werden kann;
Mittel (56, 58, 62, 67, 68) zum

(a) Bewegen der Flächen in Richtung zueinander in eine vorgegebene Komprimierungsposition, wodurch die flüssige Probe auf mindestens einer der Flächen ausgebreitet werden kann und die Flächen benetzen kann; und
(b) anschließendes Bewegen der Flächen über eine vorher ausgewählte Strecke auseinander in eine Messposition, wodurch die flüssige Probe zwischen den Flächen durch Oberflächenspannung enthalten sein kann und in eine Messsäule mit einer gewünschten optischen Weglänge gezogen werden kann;

und Mittel (3, 6, 9, 70, 74, 72) zum Ausführen der photometrischen oder spektrophotometrischen Messung durch diese Säule.

2. Vorrichtung nach Anspruch 1, die eine photometrische oder spektrophotometrische Quelle (4), die in einer Fläche enthalten ist, und einen photometrischen oder spektrophotometrischen Detektor (70), der in der anderen Fläche enthalten ist, umfasst.

**3.** Vorrichtung nach Anspruch 2, wobei eine der oder beide Quellen (74) und der Detektor (70) jeweils mit einer optischen Faser oder einer Lichtröhre (6, 11) an die Probe gekoppelt sind.

**4.** Vorrichtung nach Anspruch 2, wobei es Mittel (62) gibt, derart, dass der optische Weg zwischen den beiden Flächen (7, 2) und durch die Probe variiert werden kann, um einem weiten Bereich von Probenabsorptionen Rechnung zu tragen.

**5.** Vorrichtung nach Anspruch 2, wobei die Quelle (83) ausgelegt ist, eine Fluoreszenz in der Probe (5) anzuregen, und der Detektor zugeordnete Mittel (6) besitzt, um die Quellbeleuchtung zu blockieren und nur die Fluoreszenz zu detektieren.

**6.** Vorrichtung nach Anspruch 1, wobei die Vorrichtung einen Rahmen umfasst;
eine der Flächen eine festgelegte oder Ambossfläche (7) ist, die auf dem Rahmen befestigt ist;
die andere der Flächen eine bewegliche Fläche (2) ist, die in dem Rahmen parallel gegenüberliegend zu der festgelegten Ambossfläche (7) befestigt ist;
und die Vorrichtung ferner mindestens zwei optische Fasern (6, 11) umfasst, die zumindest eine der Flächen (7, 2) durchdringen, wobei jede der Fasern abschließend mit ihrer jeweiligen Fläche endet;
mindestens eine der optischen Fasern ausgelegt ist, Licht an eine Probe zu liefern, die zwischen den Flächen enthalten ist, und die andere optische Faser ausgelegt ist, durchgelassene oder angeregte Energie an einen Detektor zu senden.

**7.** Vorrichtung nach Anspruch 6, wobei sich die mindestens zwei optischen Fasern (6, 11) gegenüberliegen und wobei jede Fläche (7, 2) durch mindestens eine Faser durchdrungen wird.

## Revendications

**1.** Appareil servant à effectuer une mesure photométrique ou spectrophotométrique sur un échantillon liquide, comportant
des moyens mettant en place deux surfaces opposées (2, 7) mobiles l'une par rapport à l'autre, l'échantillon (9) pouvant être placé sur une desdites surfaces opposées ou une partie de l'échantillon pouvant être placée sur chacune desdites surfaces ;
des moyens (56, 58, 62, 67, 68) servant à

(a) rapprocher les surfaces l'une de l'autre jusqu'à une position prédéterminée de compression l'échantillon liquide sur au moins une desdites surfaces pouvant ainsi être étalé et pouvant mouiller les surfaces ; et
(b) écarter ensuite les surfaces l'une de l'autre sur une distance présélectionnée jusqu'à une position de mesure, l'échantillon liquide pouvant ainsi être contenu entre les surfaces par tension superficielle et étiré pour donner une colonne de mesure présentant une longueur souhaitée de chemin optique ;

et des moyens (3, 6, 9, 70, 74, 72) servant à effectuer ladite mesure photométrique ou spectrophotométrique à travers la colonne en question.

**2.** Appareil selon la revendication 1, comprenant une source photométrique ou spectrophotométrique (74) contenue dans l'une desdites surfaces, et un détecteur photométrique ou spectrophotométrique (70) contenu dans l'autre desdites surfaces.

**3.** Appareil selon la revendication 2, un élément ou les deux parmi la source (74) et le détecteur (70) étant couplés chacun à l'échantillon à l'aide d'une fibre optique ou d'un conduit (6, 11) de lumière.

**4.** Appareil selon la revendication 2, doté d'un moyen (62) permettant de faire varier le chemin optique entre les deux surfaces (7, 2) et à travers l'échantillon pour s'adapter à une gamme étendue d'absorbances de l'échantillon.

**5.** Appareil selon la revendication 2, la source (83) étant configurée de façon à exciter une fluorescence dans l'échantillon (5) et le détecteur étant doté d'un moyen associé (6) pour bloquer l'éclairement de la source et ne détecter que la fluorescence.

**6.** Appareil selon la revendication 1, l'appareil comportant un bâti ;

une desdites surfaces étant une surface fixe (7) ou de butée montée sur le bâti ;

l'autre desdites surfaces étant une surface mobile (2) montée dans le bâti en opposition parallèle à ladite surface fixe (7) de butée ;

et l'appareil comportant en outre au moins deux fibres optiques (6, 11) transperçant au moins une desdites surfaces (7, 2), chacune des fibres ayant subi une finition de manière à affleurer sa surface respective ; au moins une des fibres optiques étant configurée de façon à amener une lumière jusqu'à un échantillon contenu entre les surfaces, et une autre fibre optique étant configurée de façon à transmettre une énergie transmise ou excitée à un détecteur.

7. Appareil selon la revendication 6, lesdites au moins deux fibres optiques (6, 11) étant opposées et chaque surface (7, 2) étant transpercée par au moins une fibre.

# FIG. 1

6

83

# FIG. 2

18

**FIG. 3b**

20

**FIG. 3c**

40

9

10

25

30

**FIG. 3a**

**FIG. 3d**

**FIG. 4a**

**FIG. 4b**

FIG. 5a

FIG. 5b

FIG. 6a

FIG. 6b

310

P₁    △P

**FIG. 7a**

310

P₂

**FIG. 7b**

# FIG. 8

**FIG. 9**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4643580 A, Gross
- US 4910402 A, McMillan
- US 4286881 A
- US 5739432 A